# EUROPÄISCHE PATENTANMELDUNG

(11) **EP 1 367 306 A1**
(43) Veröffentlichungstag der Anmeldung: **03.12.2003**
(21) Anmeldenummer: 02012055.6
(22) Anmeldetag: 31.05.2002
(51) Int. Cl.: F16K 11/048, F16K 27/02

(54) **Ventileinsatz**

(71) Anmelder: Grundfos a/s, 8850 Bjerringbro (DK)
(72) Erfinder: Dossing, Bent, 8600 Silkeborg (DK)
(74) Vertreter: Vollmann, Heiko, Dipl.-Ing.

(57) **Zusammenfassung**

Der Ventileinsatz (1) ist für eine Kompaktheizungsanlage zum Umschalten zwischen zwei Heizkreisen vorgesehen. Er weist einen Grundkörper auf, in dem zwei Dichtsitze (13, 14) vorgesehen sind, die mittels eines verschiebbar im Ventileinsatz angeordneten Betätigungsorgans (21) und darauf angeordneter Dichtkörper (25, 27) verschließbar bzw. öffenbar sind.

## Beschreibung

Die Erfindung betrifft einen Ventileinsatz für eine Kompaktheizungsanlage gemäß den im Oberbegriff des Anspruchs 1 angegebenen Merkmalen.

Kompaktheizungsanlagen der angesprochen Art sind beispielsweise aus EP 0 797 057 B1 bekannt. Bei diesen Anlagen werden eine Vielzahl von Anlagenkomponenten auf engstem Raum zusammengefasst. Hierzu sind üblicherweise ein oder mehrere konstruktiv aufwendig gestaltete Spritzgussteile vorgesehen, an welche die Verrohrung, der Wärmetauscher, die Pumpe und weitere Bauteile unmittelbar angeschlossen werden. Diese Anlagen sind typischerweise zur Versorgung der Raumheizung einerseits und zur Erzeugung von Warmwasser andererseits vorgesehen. Die in einem primär Wärmetauscher dem Fluid zugeführte Wärme wird dabei je nach Betriebsart wahlweise der Raumheizung, d. h. den Heizkörpern oder einem Sekundärwärmetauscher, welcher das zu entnehmende Brauchwasser erwärmt, zugeführt. Hierzu ist ein Umschaltventil erforderlich, das den vom Primärwärmetauscher kommenden Fluidstrom entweder mit dem einen oder mit dem anderen Heizkreis verbindet oder aber den Rücklauf des jeweiligen Heizkreises mit der zum Primärwärmetauscher führenden Leitung verbindet. Ungeachtet der konstruktiven Anordnung dieses 3/2-Wegeventils ist hierzu üblicherweise ein Ventileinsatz vorgesehen, welcher in die Kompaktheizungsanlage eingebaut wird und diese Funktionen mit wahrnimmt.

Zwar ist in EP 0 797 057 B1 nicht im Einzeln beschrieben, wie der Ventileinsatz konstruktiv gestaltet ist, doch haben sich derzeit im Wesentlichen zwei Bauarten auf dem Markt etabliert. Bei der einen Bauart, wird der Ventileinsatz von zwei Seiten in die Anlage eingebaut, was aufwendig ist und darüber hinaus einen Verschlusskörper an einer Seite bedingt, bei der anderen wird der Ventileinsatz von einer Seite her in die Anlage eingeschoben. Derartige Ventileinsätze sind beispielsweise aus EP 0 679 821 B1 oder DE 201 03 992 U 1 bekannt.

Diese Ventileinsätze haben sich zwar grundsätzlich bewährt, da sie in der Regel von vorne in die Anlage eingegliedert werden können, sie haben jedoch den Nachteil, dass anlagenseitig recht hoher Fertigungsgenauigkeiten gefordert werden, um die Funktionsfähigkeit sicherzustellen. Darüber hinaus muss bei Beschädigung eines innerhalb der Heizungsanlage vorgesehenen Dichtsitzes, was beispielsweise durch in den Dichtsitz beim Schließen gelangende Schmutzpartikel erfolgen kann, der entsprechende Anlagenteil mit ausgetauscht werden, was extrem kosten- und arbeitsaufwendig ist.

Vor diesem Hintergrund liegt der Erfindung die Aufgabe zugrunde, einen gattungsgemäßen Ventileinsatz so auszubilden, dass die vorgenannten Nachteile vermieden oder zumindest vermindert werden und das anlagenseitig die Fertigung vereinfacht wird.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben.

Grundgedanke der vorliegenden Erfindung ist es, nicht nur den oder die Dichtkörper, sondern beide Dichtsitze im Ventileinsatz zu integrieren. Hierdurch werden an die Fertigungsgenauigkeit der Heizungsanlage, insbesondere der Aufnahme für den Ventileinsatz wesentlich geringere Anforderungen gestellt als dies bisher erforderlich war. Es muss nämlich weder der Ventileinsatz in seiner Länge und Anordnung exakt zur anlagenseitigen Aufnahme abgestimmt sein bzw. umgekehrt noch braucht anlagenseitig ein Dichtsitz vorgesehen zu sein, der ebenfalls eine hohe Fertigungsgenauigkeit erfordert. Diese präzisen und aufeinander abgestimmten Bauteile sind gemäß der Erfindung sämtlichst im Ventileinsatz vorgesehen, so dass auch im Falle einer Undichtigkeit, eines Defekts oder eines sonstigen Ausfalls lediglich der Ventileinsatz zu erneuern ist und keine Komponenten der Kompaktheizungsanlage. Insbesondere bei Beschädigung eines Dichtsitzes kann dieser durch Auswechseln des Ventileinsatzes behoben werden.

Grundsätzlich sind für einen solchen Ventileinsatz der eingangs genannten Art zwei Sitzventile mit jeweils einem Dichtsitz und einem Dichtkörper vorgesehen um das 3/2-Wegeventil zu realisieren. Vorteilhaft werden dabei beide Dichtkörper mittels eines gemeinsamen Betätigungsorgans gesteuert, d. h. innerhalb des Ventileinsatzes verschoben. Dabei ist die Anordnung so, dass in der einen Endlage ein Dichtkörper dichtend auf dem zugehörigen Dichtsitz angeordnet ist und der andere Dichtkörper einen Kanal freigibt und umgekehrt in der anderen Endlage. Es versteht sich, dass zwei Dichtkörper im Sinne der vorliegenden Erfindung auch durch ein einstückiges Bauteil gebildet sein können, welches beide Dichtkörper vereint.

Vorteilhaft sind die Dichtsitze beide im Grundkörper angeordnet, da dann beispielsweise beim Instandsetzen des Ventileinsatzes, lediglich dieser Grundkörper auszutauschen ist, wenn einer oder beide Dichtsitze erneuert werden sollen.

Bevorzugt ist das Betätigungsorgan durch eine im Grundkörper verschiebbar gelagerte Stange gebildet, auf der die Dichtkörper (oder der gemeinsame, beide Dichtkörper vereinende Körper) in einem vorgegebenen Abstand zueinander befestigt sind. Wenn dann diese Stange, wie gemäß der Erfindung vorgesehen, formschlüssig mit einer Antriebseinheit verbunden ist, dann kann die Ventilstellung druckunabhänig gesteuert werden, ohne dass die Gefahr von Wasserschlägen oder Strömungseinflüssen besteht.

Der Abstand der Dichtkörper zueinander kann in einfacher Weise durch einen auf der Stange zwischen den Dichtkörpern angeordneten Abstandhalter bestimmt sein, so dass auch insofern geringere Anforderungen an Fertigungsgenauigkeiten bestehen.

Die Dichtkörper selbst werden vorzugsweise durch elastomere Scheiben, beispielsweise aus Gummi oder einem elastomeren Kunststoff gebildet, sie können zwischen Abstandhalter einerseits und Stützscheiben andererseits zwischen einem Absatz der Stange und einem Befestigungselement eingespannt sein.

Gemäß einer vorteilhaften Ausgestaltung der Erfindung schließt an den Grundkörper ein Kupplungskörper an, der ebenfalls Teil des Ventileinsatzes ist und in dem die Stange dichtend nach außen zu einem mechanischen Antrieb geführt ist und an diesem angekuppelt ist. Der Grundkörper bildet dann den Teil des Einsatzes, in dem die Dichtsitze vorgesehen sind, wohingegen der Kupplungskörper für das Festlegen des Einsatzes in der Anlage vorgesehen ist sowie darüber hinaus zum Anschluss der Antriebseinheit. Den unterschiedlichen Anforderungen kann sowohl hinsichtlich der Fertigungstoleranz als auch hinsichtlich der Materialwahl günstig Rechnung getragen werden.

Dabei ist es von Vorteil, wenn ein Dichtungsring, insbesondere ein O-Ring, der den Einsatz gegenüber der Aufnahme abdichtet zwischen Grundkörper und Kupplungskörper angeordnet ist, beispielsweise durch eine dazwischen gebildete Nut. Eine solche aus zwei Bauteilen gebildeten Nut hat gegenüber einer umlaufenden Nut in einem Spritzgussbauteil den Vorteil, dass diese gratfrei ist und damit eine bessere Dichtwirkung gewährleistet. Im Übrigen kann das Werkzeug für die Bauteile wesentlich einfacher gestaltet werden, da eine Entformung in einer Richtung möglich ist.

Um Grundkörper und Kupplungskörper, die vorzugsweise beide als Spritzgussteile ausgebildet sind, einfach, lösbar und definiert miteinander verbinden zu können, ist es zweckmäßig eine Bajonettverbindung zwischen diesen Bauteilen vorzusehen, welche diese formschlüssig verbindet. Der Formschluss ist in Einbaulage vollständig, da das Bajonett nur in ausgebautem Zustand des Ventileinsatzes geöffnet werden kann.

Vorteilhaft weist der Kupplungskörper eine Kulissenführung auf, in welche der mechanische Antrieb, insbesondere in Form einer Antriebseinheit vorzugsweise quer einschiebbar ist. Durch das Quereinschieben kann nicht nur eine Verriegelung in Betätigungsrichtung ohne weitere konstruktive Maßnahmen erfolgen, sondern es kann gleichzeitig durch die definierte Positionierung auch eine Kupplung mit dem Betätigungsorgan erfolgen, und zwar ebenfalls formschlüssig. Hierzu ist es zweckmäßig, am antriebsseitigen Ende der Stange einen Vorsprung vorzusehen, der formschlüssig vom Betätigungsglied der Antriebseinheit umgriffen ist. Das Betätigungsglied weist hierzu einseitig eine Ausnehmung auf, welche beim Einschieben der Antriebseinheit den Vorsprung am Ende der Betätigungsstange übergreift und somit formschlüssig in Achsrichtung der Stange mit dem Betätigungsglied der Antriebseinheit kuppelt. Die Antriebseinheit kann daher die Betätigungsstange in beide Richtungen betätigen, es ist somit keine Federrückstellung erforderlich, welche die bekannten und die weiter oben geschilderten Nachteile aufweist.

Die Antriebseinheit weist bevorzugt einen Schrittmotor mit nach geschaltetem Spindeltrieb auf, so dass eine ausschließlich elektrische Ansteuerung ausreicht, um die Dichtkörper in Bezug auf Dichtsitze in eine definierte Stellung zu verfahren.

Der erfindungsgemäße Ventileinsatz ist bevorzugt in Einschieberichtung abgestuft oder konisch ausgebildet, so dass er ohne größeren Reibungswiderstand und ohne die umlaufenden Dichtungen, insbesondere O-Ringe in ihrer Oberfläche zu beschädigen, in die anlagenseitige Aufnahme eingeschoben werden kann. Konstruktiv sind daher die O-Ringe, welche den Einsatz gegenüber der Aufnahme abdichten - dies sind bei der erfindungsgemäßen Ausbildung typischerweise drei - so dimensioniert, dass von innen nach außen gesehen sich der Durchmesser vergrößert, entsprechendes gilt für die Nuten bzw. die aufnahmeseitigen Dichtflächen.

Die Erfindung ist nachfolgend anhand eines in der Zeichnung dargestellten Ausführungsbeispiels näher erläutert. Es zeigen
- Fig. 1: einen erfindungsgemäßen Ventileinsatz in Einbaulage im Längsschnitt mit angeschlossener Antriebseinheit,
- Fig. 2: Grundkörper und Kupplungskörper des Ventileinsatzes gemäß Fig. 1 in Explosionsdarstellung und
- Fig. 3: die Betätigungsstange mit den darauf angeordneten Dichtkörpern in Explosionsdarstellung.

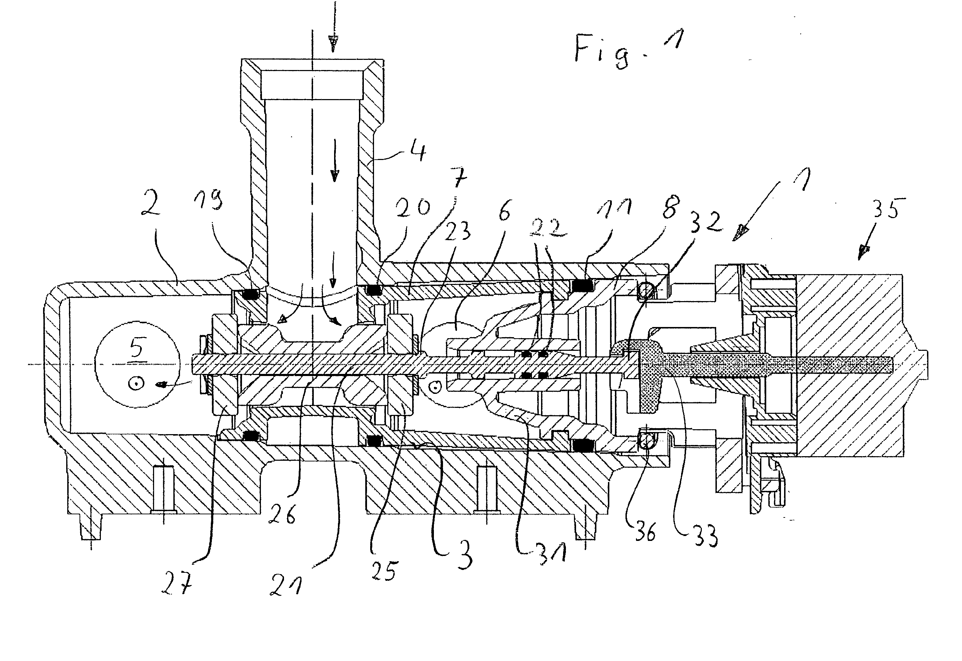

In Fig. 1 ist ein Ventileinsatz 1 in Einbaulage in einer Baueinheit 2 einer-Kompaktheizungsanlage dargestellt. Die Baueinheit 2 weist eine Aufnahme 3 für den Ventileinsatz 1 auf. Innerhalb der Aufnahme 3 münden ein Einlassstutzen 4 sowie zwei ausgangsseitige Kanäle 5 und 6, die mittels des Ventils beschaltet werden. Die Durchflussrichtüng ist dabei typischerweise entsprechend der Pfeildarstellung vom Einlassstutzen 4 zum ausgangsseitigen Kanal 5 und/oder Kanal 6.

Der Ventileinsatz 1 weist einen Grundkörper 7 sowie einem daran anschließenden Kupplungskörper 8, die über eine Bajonettverbindung 9, 10 unter Eingliederung eines O-Rings 11 formschlüssig miteinander verbunden sind. Bei dem Grundkörper 7 handelt es sich um ein Gebilde von im Wesentlichen hohlzylindrischer Form das mit in Richtung zur Aufnahme 3 hin kleiner werdenden Außendurchmesser ausgebildet ist, um es zusammen mit dem Kupplungskörper 8 möglichst reibungsarm in die Aufnahme 3 einschieben zu können. Der Grundkörper 7 weist an seinem zum Kupplungskörper 8 weisenden Ende einen Bajonettring 9 mit zwei nach innen weisenden Vorsprüngen 12 auf, welche in eine kupplungskörperseitig vorgesehene Bajonettaufnahme 10 einführbar und durch Drehen in dieser verriegelbar sind.

Der Grundkörper 7 weist zwei Dichtsitze 13 und 14 auf, im Bereich dieser Dichtsitze ist der Grundkörper 7 ringförmig ausgebildet, dazwischen durch längsverlaufende Stege 15 verbunden bzw. durch Stege 16 mit dem Bajonettring 9. Im Bereich der Dichtsitze 13 und 14 weist der Grundkörper 7 an seinem Außenumfang eine Nut 17 sowie eine Nut 18 größeren Durchmessers auf die zum Eingliedern eines O-Rings 19 bzw. eines O-Rings 20 vorgesehen sind. Der O-Ring 19 weist einen kleineren Durchmesser als der O-Ring 20 und der O-Ring 20 einen kleineren Durchmesser als der O-Ring 11 auf. Die Innenwandung der Aufnahme 3 ist in diesen Bereichen entsprechend dimensioniert, so dass sich nach Einschieben des Ventileinsatzes 1 in die Aufnahme 3 eine Abdichtung in diesen Bereichen zwischen Grundkörper 7 bzw. Kupplungskörper 8 und der Aufnahme 3 ergibt.

Innerhalb des Grundkörpers 7 und des Kupplungskörpers 8 ist eine Betätigungsstange 21 in Richtung ihrer Längsachse verschiebbar gelagert.

Innerhalb des Kupplungskörpers 8 ist die Betätigungsstange 21 geführt, mittels zweier O-Ringe 22 und gegenüber diesem abgedichtet. Auf der Betätigungsstange 21 sitzt von einem Absatz 23 aus ins Innere des Aufnahme 3 gesehen eine Stützscheibe 24, ein Dichtkörper 25 ein Abstandskörper 26, ein Dichtkörper 27, eine Stützscheibe 28 sowie eine Spannscheibe 29. Die vorgenannten Bauteile sind auf die Betätigungsstange aufgeschoben und werden durch die abschließende Spannscheibe 29, deren Innenduchmesser kleiner als der Außendurchmesser des zylindrischen Endabschnitts der Betätigungsstange 21 ist, kraftschlüssig gehalten, indem die am Innenumfang gebildeten fünf Blechabschnitte 30 auf der Betätigungsstange 21 verspannt werden und auf diese Weise die vorgenannten Bauteile halten.

Der Dichtkörper 25 ist dem Dichtsitz 13 und der Dichtkörper 27 dem Dichtsitz 14 zugeordnet. Der Abstandskörper 26 ist so dimensioniert, dass in der in Fig. 1 dargestellten Zwischenstellung der Einlaß 4 mit den Kanälen 5 und 6 leitungsverbunden ist, allerdings nur mit jeweils hälftigem Querschnitt. Der volle Querschnitt der Kanalverbindung wird nur in den jeweiligen Endstellungen erreicht, d. h. die Leitungsverbindung zwischen dem Einlaß 4 und dem Kanal 5 ist dann vollständig geöffnet, wenn der Dichtkörper 25 auf dem Dichtsitz 13 sitzt bzw. umgekehrt wenn der Dichtkörper 27 auf dem Dichtsitz 14 sitzt ist die Leitungsverbindung zwischen Einlaß 4 und Kanal 6 vollständig hergestellt.

Wie aus Fig. 1 deutlich ersichtlich ist, sind die O-Ringe 19 und 20 in Einschubrichtung des Ventileinsatzes 1 gesehen hinter bzw. vor dem Einlaß 4 angeordnet, dichten diesen also im Bereich zwischen Grundkörper 7 und Aufnahme 3 gegenüber den Kanälen 5 bzw. 6 ab. Die Abdichtung nach außen erfolgt über den O-Ring 11, dessen Sitz ventileinsatzseitig 1 durch einen Absatz im Kupplungskörper gebildet ist.

Der Kupplungskörper 8 dichtet über seine Wandung 31 den Ventileinsatz 1 nach außen, d. h. gegenüber der Aufnahme 3 ab, und zwar umfangseitig in Verbindung mit dem O-Ring 11 und im Bereich der Durchführung der Betätigungsstange 21 mittels der O-Ringe 22.

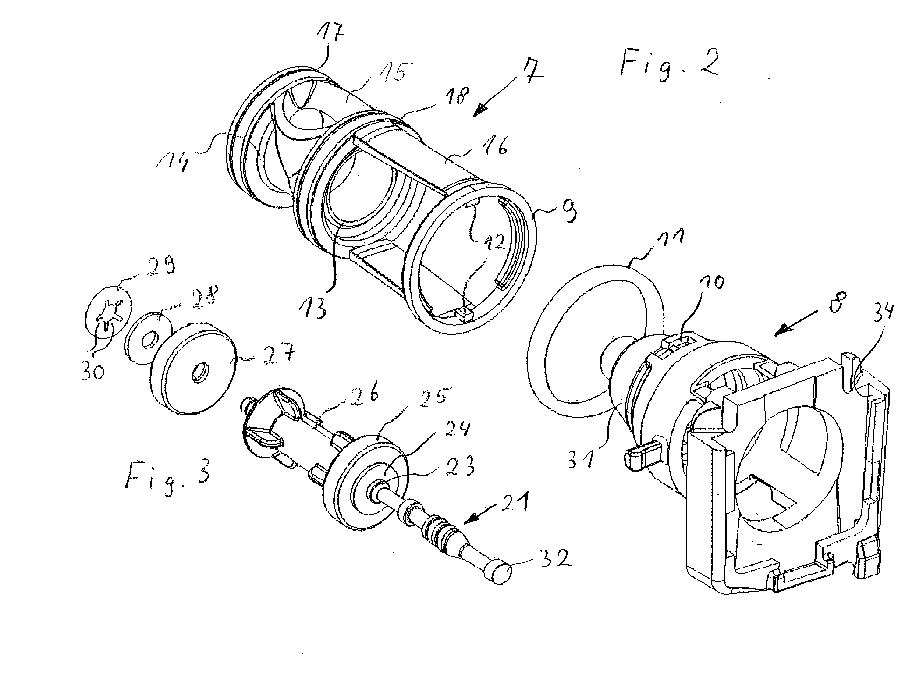

Die Betätigungsstange 21 weist an ihrem vom Grundkörper 7 abgewandten Ende einen endseitigen Vorsprung 32 auf, der umfangsmäßig gegenüber dem schlanken Endteil der Betätigungsstange 21 vorspringt. Dieser Vorsprung 32 dient zum formschlüssigen Kuppeln mit einem Aktor 33 einer Antriebseinheit 35, die ihrerseits formschlüssig in eine Kulissenführung 34 am Ende des Kupplungskörpers 8 durch Quereinschieben eingegliedert ist. Wie aus Fig. 2 am Besten ersichtlich ist, kann die Antriebseinheit 35 von oben, d. h. quer zur Verschieberichtung der Betätigungsstange 21 in die Kulissenführung 34 eingeschoben werden, wobei gleichzeitig das freie Ende des Aktors 33 den Vorsprung 32 am Ende der Betätigungsstange 21 derart übergreift, dass in den Verfahrrichtungen der Betätigungsstange 21 Formschluss besteht.

Die Antriebseinheit 35 besteht aus einem hier nicht im einzelnen dargestellten Schrittmotor, dem ein ebenfalls nicht im einzelnen dargestellter Spindeltrieb nachgeschaltet ist, derart, dass sich entsprechend der Drehrichtung und dem Drehwinkel des Schrittmotors der Aktor 33 um ein vorgegebenes Maß in einer vorbestimmten Richtung in Achsrichtung der Betätigungsstange 21 bewegt und damit die Stellung der Dichtkörper 25 und 27 im Bezug auf die zugehörigen Dichtsätze 13 und 14 steuert.

Wie sich insbesondere aus der Schnittdarstellung nach Fig. 1 ergibt, kann der so gebildete Ventileinsatz 1 zusammen mit der daran angeschlossen Antriebseinheit 35 in die Aufnahme 3 eingeschoben und mittels eines Bügels 36 in dieser verriegelt werden. Der Ventileinsatz 1 ist dann in bestimmungsgemäßer Weise gegenüber der Aufnahme 3 abgedichtet und lageorientiert. Es ist ersichtlich, dass insoweit aufnahmeseitig die Toleranzen relativ groß sein können, ohne die Funktion des Ventileinsatzes zu beeinflussen. Die Steuerung erfolgt ausschließlich durch entsprechende Ansteuerung des Schrittmotors. Die Antriebseinheit kann sowohl in Einbaulage als auch bei ausgebautem Ventileinsatz ausgetauscht werden. Für den Fall, dass ein Dichtsitz beschädigt oder verschlissen ist, braucht lediglich der Grundkörper 7 ausgetauscht oder nachbearbeitet zu werden. Die Dichtkörper 25 und 27 können ebenfalls vergleichsweise einfach ausgetauscht werden, nach dem der Ventileinsatz 1 aus der Aufnahme 3 entfernt ist.

Wie bereits eingangs erläutert, kann das dargestellte 3/2-Wegeventil sowohl hinter dem Primärwärmetauscher als auch vor dem Primärwärmetauscher angeordnet werden. Bei der dargestellten Ausführungsform ist es, wie sich aus der durch Pfeile in Fig. 1 angedeuteten Durchströmungsrichtung ergibt, hinter dem Primärwärmetauscher angeordnet, was noch den besonderen Vorteil hat, dass beide Dichtkörper 25 und 27 beim Verschließen des jeweiligen Kanals 5 bzw. 6 gegen Strömungsrichtung verfahren werden, wodurch schon systembedingt die Gefahr von Wasserschlägen ausgeschlossen wird. Darüber hinaus ist auch bei anderer Anordnung diese Gefahr zumindest vermindert, da die Dichtkörper 25 und 27 stets über die Betätigungsstange 21 und den daran formschlüssig angekuppelten Antrieb in beiden Verfahrrichtungen nahezu spielfrei formschlüssig geführt ist.

### Bezugszeichenliste

- 1 -: Ventileinsatz
- 2 -: Baueinheit
- 3 -: Aufnahme
- 4 -: Einlassstutzen
- 5 -: ausgangsseitiger Kanal
- 6 -: ausgangsseitiger Kanal
- 7 -: Grundkörper
- 8 -: Kupplungskörper
- 9 -: Bajonettring am Grundkörper
- 10 -: Bajonettaufnahme am Kupplungskörper
- 11 -: O-Ring
- 12 -: Vorsprünge im Bajonettring 9
- 13 -: erster Dichtsitz
- 14 -: zweiter Dichtsitz
- 15 -: Stege
- 16 -: Stege
- 17 -: Nut
- 18 -: Nut
- 19 -: O-Ring
- 20 -: O-Ring
- 21 -: Betätigungsstange
- 22 -: O-Ringe
- 23 -: Absatz
- 24 -: Stützscheibe
- 25 -: Dichtkörper
- 26 -: Abstandskörper
- 27 -: Dichtkörper
- 28 -: Stützscheibe
- 29 -: Spannscheibe
- 30 -: Blechabschnitte in der Spannscheibe
- 31 -: Wandung im Kupplungskörper
- 32 -: Vorsprung an der Betätigungsstange
- 33 -: Aktor
- 34 -: Kulissenführung im Kupplungskörper
- 35 -: Antriebseinheit
- 36 -: Verriegelungsbügel

## Patentansprüche

1. Ventileinsatz für eine Kompaktheizungsanlage zum Umschalten zwischen zwei Heizkreisen, mit einem Grundkörper (7), in dem mindestens ein Dichtkörper (25, 27) mittels eines Betätigungsorgans (21) verschiebbar angeordnet ist, mit einem Dichtsitz (13, 14) am Grundkörper (7) und mit Dichtmitteln (11,19,20), welche den Ventileinsatz (1) gegenüber der Ventileinsatzaufnahme (3)abdichten, **dadurch gekennzeichnet, dass** zwei Dichtsitze (13 und 14) im Ventileinsatz angeordnet sind.

2. Ventileinsatz nach Anspruch 2, **dadurch gekennzeichnet, dass** zwei Dichtkörper (25, 27) vorgesehen sind, die mittels des Betätigungsorgans (21) gemeinsam verschiebbar sind.

3. Ventileinsatz nach einem der vorhergehenden Ansprüche, **dadurch gekennzeichnet, dass** beide Dichtsitze (13 und 14) im Grundkörper (7) angeordnet sind.

4. Ventileinsatz nach einem der vorhergehenden Ansprüche, **dadurch gekennzeichnet, dass** das Betätigungsorgan (21) eine im Grundkörper (7) verschiebbar gelagerte Stange (21) ist, auf der die Dichtkörper (25, 27) in einem vorgegebenen Abstand zueinander befestigt sind.

5. Ventileinsatz nach einem der vorhergehenden Ansprüche, **dadurch gekennzeichnet, dass** der Abstand der Dichtkörper (25, 27) durch einen dazwischen auf der Stange (21) angeordneten Abstandhalter (26) bestimmt ist.

6. Ventileinsatz nach einem der vorhergehenden Ansprüche, **dadurch gekennzeichnet, dass** die Dichtkörper (25, 27) durch auf der Stange (21) befestigte elastomere Scheiben (25, 27) gebildet sind.

7. Ventileinsatz nach einem der vorhergehenden Ansprüche, **dadurch gekennzeichnet, dass** an den Grundkörper (7) ein Kupplungskörper (8) anschließt, der ebenfalls Teil des Ventileinsatzes (1) ist und in dem die Stange (21) dichtend nach außen zu einem mechanischen Antrieb (35) geführt und an diesen angekuppelt ist.

8. Ventileinsatz nach einem der vorhergehenden Ansprüche, **dadurch gekennzeichnet, dass** ein Dichtungsring (11), insbesondere ein O-Ring (11), zwischen Grundkörper (7) und Kupplungskörper (8) angeordnet ist, welcher den Einsatz (1) gegenüber der Aufnahme (3) abdichtet.

9. Ventileinsatz nach einem der vorhergehenden Ansprüche, **dadurch gekennzeichnet, dass** Grundkörper (7) und Kupplungskörper (8) über eine Bajonettverbindung (9, 10, 12) formschlüssig und lösbar miteinander verbunden sind.

10. Ventileinsatz nach einem der vorhergehenden Ansprüche, **dadurch gekennzeichnet, dass** der Kupplungskörper (8) eine Kulissenführung (34) aufweist, in welche der mechanische Antrieb (35), insbesondere in Form einer Antriebseinheit (35), einschiebbar und in Betätigungsrichtung verriegelbar ist.

11. Ventileinsatz nach einem der vorhergehenden Ansprüche, **dadurch gekennzeichnet, dass** die Stange (21) am antriebseitigen Ende einen Vorsprung (32) aufweist, der formschlüssig vom Betätigungsglied (33) der Antriebseinheit (35) umgriffen ist.

12. Ventileinsatz nach einem der vorhergehenden Ansprüche, **dadurch gekennzeichnet, dass** die Antriebseinheit (35) einen Schrittmotor mit nachgeschaltetem Spindeltrieb aufweist.

13. Ventileinsatz nach einem der vorhergehenden Ansprüche, **dadurch gekennzeichnet, dass** zwei oder mehr O-Ringe (11, 19, 20) vorgesehen sind, mit denen der Einsatz (1) gegenüber der Aufnahme (3) abgedichtet ist, und dass die O-Ringe (11, 19, 20) vom inneren Ende in Richtung zum Antriebseinheit (35) hin einen größer werdenden Durchmesser aufweisen.
